(19) Europäisches Patentamt
European Patent Office
Office européen des brevets

(11) **EP 1 769 228 B1**

(12) **EUROPÄISCHE PATENTSCHRIFT**

(45) Veröffentlichungstag und Bekanntmachung des Hinweises auf die Patenterteilung:
**16.04.2008 Patentblatt 2008/16**

(21) Anmeldenummer: **05758985.5**

(22) Anmeldetag: **30.06.2005**

(51) Int Cl.:
**G01N 21/17** (2006.01)

(86) Internationale Anmeldenummer:
**PCT/AT2005/000244**

(87) Internationale Veröffentlichungsnummer:
**WO 2006/007611 (26.01.2006 Gazette 2006/04)**

(54) **THERMOAKUSTISCHES TOMOGRAPHIEVERFAHREN UND THERMOAKUSTISCHER TOMOGRAPH**

THERMOACOUSTIC TOMOGRAPHIC METHOD AND THERMOACOUSTIC TOMOGRAPH

PROCEDE DE TOMOGRAPHIE THERMOACOUSTIQUE ET TOMOGRAPHE THERMOACOUSTIQUE

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **20.07.2004 AT 12292004**

(43) Veröffentlichungstag der Anmeldung:
**04.04.2007 Patentblatt 2007/14**

(73) Patentinhaber:
• **Upper Austrian Research GmbH**
  **4020 Linz (AT)**
• **Universität Innsbruck**
  **6020 Innsbruck (AT)**

(72) Erfinder:
• **BURGHOLZER, Peter**
  **A-4210 Gallneukirchen (AT)**
• **HALTMEIER, Markus**
  **A-6020 Innsbruck (AT)**
• **SCHERZER, Otmar**
  **A-6020 Innsbruck (AT)**

(74) Vertreter: **Sonn & Partner Patentanwälte**
  **Riemergasse 14**
  **1010 Wien (AT)**

(56) Entgegenhaltungen:
**US-A- 4 950 897        US-A- 5 713 356**

• **HALTMEIER M ET AL: "Thermoacoustic computed tomography with large planar receivers" INVERSE PROBLEMS IOP PUBLISHING UK, Bd. 20, Nr. 5, Oktober 2004 (2004-10), Seiten 1663-1673, XP002345340 ISSN: 0266-5611**
• **ANDREEV V G ET AL: "Detection of ultrawide-band ultrasound pulses in optoacoustic tomography" IEEE TRANSACTIONS ON ULTRASONICS, FERROELECTRICS AND FREQUENCY CONTROL IEEE USA, Bd. 50, Nr. 10, Oktober 2003 (2003-10), Seiten 1383-1390, XP002345341 ISSN: 0885-3010**
• **ANDREEV V G ET AL: "Image reconstruction in 3D optoacoustic tomography system with hemispherical transducer array" PROCEEDINGS OF THE SPIE - THE INTERNATIONAL SOCIETY FOR OPTICAL ENGINEERING SPIE-INT. SOC. OPT. ENG USA, Bd. 4618, 2002, Seiten 137-145, XP002345342 ISSN: 0277-786X**
• **OBERHEIDE U ET AL: "Two-dimensional detection of optoacoustic stress transients" PROCEEDINGS OF THE SPIE, SPIE, BELLINGHAM, VA, US, Bd. 4618, 2002, Seiten 99-105, XP002292756 ISSN: 0277-786X**
• **PILATOU MAGDALENA C ET AL: "Analysis of three-dimensional photoacoustic imaging of a vascular tree in vitro" REVIEW OF SCIENTIFIC INSTRUMENTS, AMERICAN INSTITUTE OF PHYSICS, US, Bd. 74, Nr. 10, Oktober 2003 (2003-10), Seiten 4495-4499, XP012040469 ISSN: 0034-6748**

EP 1 769 228 B1

**Beschreibung**

Die Erfindung betrifft ein thermoakustisches Tomographieverfahren zur Abbildung eines Objekts, wobei das Objekt durch eine Quelle thermisch angeregt wird und die durch die thermische Anregung hervorgerufenen akustischen Wellen des Objekts aus verschiedenen Richtungen des Objekts mit zumindest einem Detektor erfasst werden und aus den detektierten akustischen Wellen und der Lageinformation ein Abbild des Objekts rekonstruiert wird.

Die Erfindung betrifft auch einen thermoakustischen Tomograph zur Abbildung eines Objekts mit zumindest einer Quelle zur thermischen Anregung des Objekts, zumindest einem Detektor zur Erfassung der vom Objekt durch die Anregung hervorgerufenen akustischen Wellen, mit einer Einrichtung zur Bewegung des Objekts und bzw. oder des zumindest einen Detektors relativ zueinander und mit einer Einrichtung zur Rekonstruktion des Objekts aus den erfassten akustischen Wellen in Abhängigkeit der jeweiligen Lage des Objekts.

Unter den Begriff Objekt fallen verschiedenste dreidimensionale und zweidimensionale Gebilde.

Wird ein halbtransparentes Objekt beispielsweise mit einem kurzen elektromagnetischen Puls thermisch angeregt, so wird durch die plötzliche thermische Ausdehnung im Inneren des Objekts eine Druckverteilung erzeugt, die eine akustische welle auslöst. Der dabei erzeugte Schalldruck ist proportional zur räumlichen Verteilung der absorbierten elektromagnetischen Energie. Die thermoakustische Tomographie rekonstruiert diese räumliche Verteilung im Objekt aus den gemessenen Schallwellen außerhalb des Objekts. Da beispielsweise karzinogenes Gewebe und gesundes Gewebe stark unterschiedliche elektromagnetische Absorptionskoeffizienten aufweisen, gibt die thermoakustische Tomographie einen guten Kontrast bei der Abbildung dieser beiden Gewebetypen, welche beispielsweise mit Ultraschallverfahren nicht erzielbar wären. Neben der Medizin gibt es aber auch andere Anwendungsgebiete für die thermoakustische Tomographie. Bei bisherigen thermoakustischen Tomographieverfahren werden für die Erfassung der akustischen Wellen außerhalb des Objekts kleine idealerweise punktförmige akustische Detektoren verwendet, welche relativ zum Objekt bewegt werden und es wird schließlich aus der Fülle an Daten ein Abbild des Objekt rekonstruiert. Alle bisherigen Rekonstruktionsverfahren basieren auf Näherungsmodellen. (siehe beispielsweise: R.A. Kruger, D.R. Reinecke, G.A. Kruger: Thermoacoustic computed tomography - technical considerations. Medical Physics, Volume 26 Issue 9, pp 1832 - 1837, 1997; R.A. Kruger, W.L. Kiser, K.D. Miller, H.E. Reynolds: Thermoacoustic CT: Imaging Principles. Proceedings SPIE 3916, pp 150 - 159, 2000).

Thermoakustische Tomographieverfahren, bei welchen punktförmige Detektoren oder Arrays solcher Detektoren verwendet werden, welche im Fernfeld der Ultraschallquelle arbeiten, werden auch im Artikel von Andreev V. G. et al.: "Detection of ultrawide-band ultrasound pulses in optoacoustic tomography" (IEEE transaction on ultrasonics, ferroelectrics and frequency control IEEE USA, Bd. 50, Br. 10, Oktober 2003) und im Artikel von Oberheide U. et al.: "Two-dimensional detection of optoacoustic stress transients" (PROCEEDINGS OF THE SPIE, SPIE, BELLINGHAM, VA, US, Bd. 4618, 2002, Seiten 99 bis 105) beschrieben. Bei der Verwendung punktförmiger Detektoren oder Arrays von punktförmigen Detektoren erfolgt eine Rekonstruktion der Bilddaten aus sphärischen Mitteln, die nie exakt durchgeführt werden kann. Der Grund dafür liegt darin, dass die Messanordnung mit kleinen Detektoren nicht kompatibel mit der Modellannahme von Punktdetektoren, gemäß welcher ein Punktdetektor als unendlich kleiner Flächendetektor angesehen wird, ist.

Die US 5,840,023 A beschreibt ein optoakustisches bildgebendes Verfahren für medizinische Anwendungen, bei dem die thermische Anregung des menschlichen Gewebes mittels eines Lasers erfolgt. Zur Detektion der vom Objekt ausgehenden akustischen Wellen wird ein kleiner Detektor oder ein Array mehrerer kleiner Detektoren verwendet. Dabei können sowohl piezoelektrische als auch optische Detektoren zur Anwendung kommen.

Die US 6,567,688 B1 zeigt ein thermoakustisches Tomographieverfahren, bei dem biologisches Gewebe mit Hilfe von Mikrowellen thermisch angeregt wird und die resultierenden Schallwellen mit Hilfe eines Ultraschallwandlers aufgenommen werden. Es handelt sich im Gegensatz zu obigen Patent um ein Echtzeit Rastverfahren (auf Englisch: real time scanning method) und kein Rekonstruktionsverfahren. Auch dabei wird ein relativ kleiner Detektor oder ein Array mehrerer Detektoren verwendet, die synthetisch fokussiert werden können.

Die US 6,633,774 B2 beschreibt ein thermoakustisches bildgebendes System zur Strukturuntersuchung von Gewebe, welches durch eine elektromagnetische Strahlungsquelle thermisch angeregt wird. Eine drehbare Anordnung mehrerer Detektoren erfasst die vom Objekt ausgehenden akustischen Wellen. Dabei finden Arrays mehrerer kleiner Detektoren Anwendung. Mit den aufgezeichneten Daten wird das Objekt näherungsweise rekonstruiert. Zur Anregung können auch mehrere Strahlungsquellen vorgesehen sein, welche miteinander synchronisiert werden. Als Detektoren kommen Piezo-Elemente zur Anwendung.

Die Aufgabe der vorliegenden Erfindung besteht in der Schaffung eines thermoakustischen Tomographieverfahrens und eines thermoakustischen Tomographen, durch welche eine optimale Bildqualität und Auflösung bei vertretbarem Aufwand zur Rekonstruktion der Bilddaten verbunden ist. Dabei soll möglichst auf bekannte Rekonstruktionsmethoden zugegriffen werden können. Nachteile bekannter Verfahren und Systeme sollen vermieden bzw. reduziert werden.

Gelöst wird die erfindungsgemäße Aufgabe in verfahrensmäßiger Hinsicht dadurch, dass ein Detektor mit einer Größe, die zumindest in einer Dimension mindestens $\sqrt{8} \cdot d$ beträgt, verwendet wird, und die vom Detektor erfassten akustischen Wellen zumindest in einer Richtung über eine Länge von mindestens $\sqrt{8} \cdot d$ integriert werden, wobei d den maximalen Abstand eines Punktes des abzubildenden Objekts vom Detektor bezeichnet. Es wird also beim erfindungsgemäßen Verfahren ein Detektor verwendet, der eine Größe aufweist, die zumindest in einer Dimension mindestens $\sqrt{8} \cdot d$ beträgt, so dass die mit dem Detektor erfassten akustischen Wellen über diese Länge integriert werden. Durch die Integration über diese Dimension des Detektors können nun zur Rekonstruktion des Abbilds des Objekts Rechenmethoden herangezogen werden, die eine sehr hohe Auflösung ermöglichen. Die Größe des Detektors ermöglicht die Messung des vom Objekt ausgehenden gesamten Schalldrucks auf die Ebene, die den Detektor enthält.

Je nach Form des Detektors mit der erfindungsgemäßen Dimension können verschiedene aus anderen bildgebenden Verfahren bekannte mathematische Verfahren angewendet werden. Der Detektor wird in an sich bekannter Weise um das Objekt bzw. das Objekt um den Detektor bewegt und entsprechend viele Daten aufgenommen, welche schließlich eine Rekonstruktion des Objekts zulassen. Im Gegensatz zum erfindungsgemäßen Verfahren werden bei herkömmlichen thermoakustischen Tomographieverfahren die Messdaten an den akustischen Detektoren als Punktmessdaten interpretiert. Diese Näherung impliziert, dass die Auflösung der Rekonstruktion physikalisch durch die Größe der Detektoren limitiert wird. Durch die Verwendung von großflächigen integrierenden Detektoren kann diese Annäherung vermieden werden. In diesem Fall ist die räumliche Auflösung nur durch die maximal detektierbare Frequenz der akustischen Schallwellen begrenzt.

Gemäß einem weiteren Merkmal der Erfindung ist vorgesehen, dass die vom Detektor erfassten akustischen Wellen in einer Richtung über die Länge von mindestens $\sqrt{8} \cdot d$ integriert werden. Durch die Verwendung derartiger linienförmiger oder streifenförmiger Detektoren kann auf bekannte mathematische Rekonstruktionsverfahren zurückgegriffen werden. Im Gegensatz zu flächigen Detektoren müssen nämlich derartige linienförmige Detektoren nicht in alle Raumrichtungen gedreht werden, sondern können auf einer festen Achse geführt werden bzw. kann das Objekt um eine feste Achse gedreht werden.

Ebenso ist es natürlich möglich, dass die Detektoren großflächig sind, wobei der Durchmesser der Fläche mindestens $\sqrt{8} \cdot d$ beträgt.

Sofern die Detektoren eben ausgebildet sind, kann die Rekonstruktion des Abbildes des Objekts beispielsweise mit Hilfe der inversen Radon-Transformation erfolgen. Die Radon-Transformation ist in der digitalen Bildverarbeitung wohl bekannt, weshalb eine Reihe von Berechnungs- und Inversionsmethoden existieren, welche eine Rekonstruktion der Abbildung des Objekts erleichtern. Bei der Radon-Transformation handelt es sich um die von Johann Radon 1917 definierte und später nach ihm benannte lineare Integraltransformation. Diese spielt in der Computertomographie zur Rekonstruktion von zweidimensionalen Funktionen aus eindimensionalen Projektionen eine fundamentale Rolle. Durch die Verwendung der erfindungsgemäßen großflächigen Detektoren kann die Inversion der dreidimensionalen Wellengleichung, welche bei punktförmigen Detektoren zur Rekonstruktion angewendet wird, auf die Lösung eines Systems von eindimensionalen Wellengleichungen reduziert werden.

Bei den oben genannten linienförmigen Detektoren können Kombinationen verschiedener anderer Rekonstruktionsverfahren zum Einsatz kommen.

Zur Rekonstruktion des Abbildes des Objekts können die erfassten Werte mehrerer Detektoren verarbeitet werden. Dies reduziert auch die Messdauer, da die notwendigen Bewegungen der Detektoren um das Objekt bzw. umgekehrt durch die Anzahl der verwendeten Detektoren entsprechend reduziert werden.

Das Verfahren wird meist dadurch erleichtert, dass der zumindest eine Detektor um das Objekt bewegt wird. Eine Drehung des Objekts bzw. eine gegenseitige Bewegung der Detektoren und des Objekts zueinander ist auch möglich.

Vorteilhafterweise wird das rekonstruierte Abbild des Objekts auf einem Bildschirm oder dgl. angezeigt.

Wenn die durch die thermische Anregung hervorgerufenen akustischen Wellen des Objekts im Ultraschallfrequenzbereich bis zu einigen GHz erfasst werden, kann dadurch unter Verwendung entsprechend geeigneter Detektoren, wie z.B. besonders dünner Piezo-Folien oder Schichten eine Ortsauflösung im Mikrometerbereich erzielt werden. Die räumliche Auflösung der Abbilder des Objekts ist bei Verwendung entsprechender Detektoren nur durch diese maximale detektierbare Ultraschallfrequenz begrenzt.

Zur Erzielung besserer Messergebnisse kann das Objekt auch mit Kontrastmitteln zur Beeinflussung des Absorptionsverhaltens versehen werden. Dabei können wie bei anderen bildgebenden Verfahren beispielsweise in der Medizin übliche Kontrastmittel zum Einsatz kommen.

Gelöst wird die erfindungsgemäße Aufgabe auch durch einen oben erwähnten thermoakustischen Tomographen, bei dem der zumindest eine Detektor zumindest in einer Dimension eine Ausdehnung aufweist, welche mindestens $\sqrt{8} \cdot d$ beträgt, wobei d den maximalen Abstand eines Punktes des abzubildenden Objekts vom Detektor bezeichnet. Durch die Verwendung derartiger Detektoren mit großer Dimension wird erreicht, dass der durch das Objekt hervorgerufene gesamte Schalldruck auf die Ebene des Detektors erfasst wird. Dadurch kann für die Rekonstruktion des dreidimensionalen Objekts auf bekannte mathematische Methoden, beispielsweise auf die inverse Radon-Transformation zurückgegriffen werden, wodurch auf stabile numerische Computeralgorithmen zurückgegriffen werden kann bei gleichzeitig besonders hoher Auflösung des rekonstruierten Objektes.

Dabei können die Detektoren linien- oder streifenförmig ausgebildet sein, wobei die Länge des Detektors mindestens $\sqrt{8}\cdot d$ beträgt.

Im Falle der Anwendung derartiger länglicher Detektoren können auch mehrere linien- oder streifenförmige Detektoren parallel zueinander angeordnet sein.

Ebenso kann natürlich der Detektor flächig ausgebildet sein, wobei der Durchmesser der Fläche mindestens $\sqrt{8}\cdot d$ beträgt.

Wenn der zumindest eine Detektor eben ausgeführt ist, wird einerseits eine einfache Konstruktion der Detektoren und andererseits die Anwendung der inversen Radon-Transformation ermöglicht.

Andererseits ist es auch möglich, dass der zumindest eine Detektor gewölbt und beispielsweise in Form eines Halbzylinders ausgeführt ist, wobei bei den Rekonstruktionsverfahren auf diese Form des Detektors Rücksicht genommen werden muss. Der Vorteil derartiger gewölbter Detektoren besteht darin, dass sie gegenüber eben ausgeführten Detektoren mit gleich großer Fläche geringere Außenabmessungen aufweisen. Die mathematischen Rekonstruktionsverfahren werden dadurch aber etwas komplizierter.

Vorteilhafterweise beträgt die obere Grenzfrequenz des Detektors mehrere GHz. Durch eine derartig hohe obere Grenzfrequenz wird eine besonders hohe Auflösung im Mikrometerbereich erzielt.

Der Detektor kann durch einen piezoelektrischen Sensor gebildet sein, welcher nach dem piezoelektrischen Effekt die auftreffenden Schallwellen direkt in elektrische Signale umwandelt. Piezoelektrische Materialien sind beispielsweise PVDF (Polyvenylidenfluorid oder ZNO (Zink-Oxid)). Derartige Materialien sind in Folienform oder als Schichten auf Substratmaterial mit besonders geringer Dicke im Mikrometer- bis sogar Nanometerbereich erhältlich. Durch die besonders geringe Dicke wird eine gute Ortsauflösung erzielt. Die Folien sind metallisiert und kontaktiert und können somit einfach mit den nachfolgenden elektronischen Schaltungen, insbesondere Verstärkern verbunden werden.

Ebenso ist es möglich die Detektoren durch andere Einrichtung zur Erfassung akustischer Schallwellen zu realisieren. Beispielsweise können optische Sensoren, insbesondere Lichtwellenleiter herangezogen werden, welche durch die auftreffenden Schallwellen verformt werden und somit eine Veränderung der durch den Lichtwellenleiter geleiteten Signale bewirkt.

Die Anregungsquelle kann durch einen Laser gebildet sein, wobei sich insbesondere Infrarotlaser eignen.

Alternativ dazu kann die thermische Anregung des dreidimensionalen Objekts auch durch eine Mikrowellenquelle realisiert werden.

Um die Schallausbreitungseigenschaften zwischen Objekt und Detektor zu verbessern, wird der zumindest eine Detektor und das Objekt vorteilhafterweise in einem flüssigen Koppelmedium angeordnet. Für dieses flüssige Koppelmedium kann destilliertes Wasser oder auch Mineralöl Verwendung finden.

Zum Schutz des Detektors kann dieser mit einer Schutzfolie versehen sein. Dabei muss darauf geachtet werden, dass die Empfindlichkeit des Detektors durch diese Schutzfolie nicht verringert wird.

Als Bewegungseinrichtung zur Bewegung des zumindest einen Detektors relativ zum Objekt bzw. umgekehrt kann ein Schrittmotor herangezogen werden.

Die Rekonstruktionseinrichtung wird üblicherweise durch einen Rechner gebildet.

Schließlich kann eine Anzeige zur Darstellung des Abbildes des Objekts vorgesehen sein.

Die vorliegende Erfindung wird anhand der beigefügten Zeichnungen näher erläutert. Darin zeigen:

> Fig. 1 ein Blockschaltbild eines thermoakustischen Tomographen gemäß eines Ausführungsbeispiels der vorliegenden Erfindung;

> Fig. 2 einen linienförmigen Detektor gemäß eines Ausführungsbeispiels der vorliegenden Erfindung;

> Fig. 3 einen flächigen ebenen Detektor mit kreisrundem Querschnitt;

> Fig. 4 einen flächigen ebenen Detektor mit quadratischem Querschnitt;

> Fig. 5 eine perspektivische Ansicht eines konkav gewölbten Detektors; und

> Fig. 6 die Anordnung mehrerer linienförmiger Detektoren im Bezug auf das abzubildende dreidimensionale Objekt.

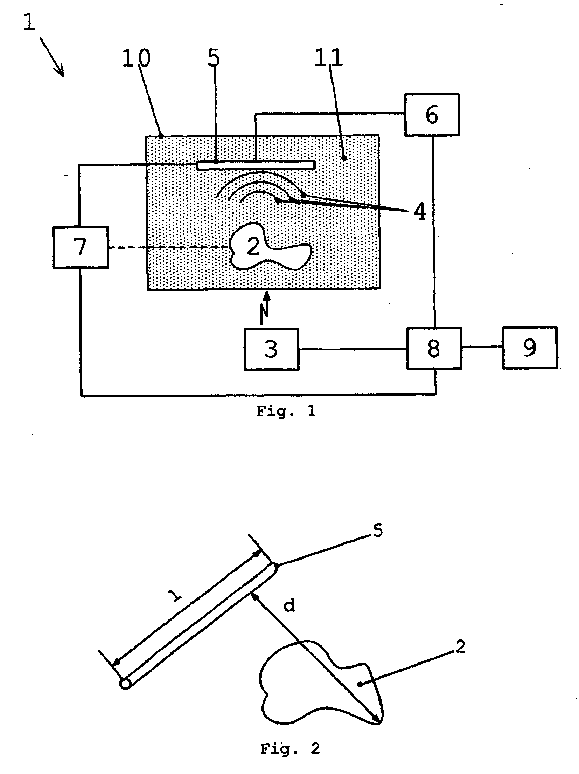

Fig. 1 zeigt einen thermoakustischen Tomographen 1 zur Abbildung eines beispielsweise dreidimensionalen Objekts 2, beispielsweise einer Gewebsprobe. Über eine Quelle 3, beispielsweise einem Pulslaser oder einer Mikrowellenquelle wird das Objekt 2 thermisch angeregt. Die vom Objekt 2 durch die thermische Anregung hervorgerufenen akustischen Wellen 4 werden von einem Detektor 5 erfasst und die erfassten Signale einem Verstärker 6 zugeführt. Zur Erzielung einer Bewegung des Objekts 2 relativ zum Detektor 5 ist eine Bewegungseinrichtung 7, beispielsweise ein Schrittmotor mit dem Objekt 2 oder dem Detektor 5 verbunden. Die vom Verstärker 6 herrührenden Signale zusammen mit den Steuersignalen der Bewegungseinrichtung 7 werden einer Einrichtung 8 zur Rekonstruktion des Objekts 2 zugeführt, welche beispielsweise durch eine entsprechende Rechnereinrichtung gebildet sein kann. Dabei ist zur entsprechenden Steuerung der thermischen Anregung die Anregungsquelle 3 auch mit der Rekonstruktionseinrichtung 8 verbunden. Schließlich kann das rekonstruierte Abbild des Objekts 2 auf einer Anzeige 9 dargestellt werden. Zur Verbesserung der Schallausbreitungseigenschaften vom Objekt 2 zum Detektor 5 sind das Objekt 2 und der Detektor 5 in einem Behälter 10 mit einem flüssigen Koppelmedium 11 angeordnet. Dieses flüssige Koppelmedium 11 kann durch destilliertes Wasser oder auch ein Mineralöl gebildet sein, welches möglichst gute Schallausbreitungsgeschwindigkeiten aufweist. Erfindungsgemäß ist der Detektor 5 zumindest in einer Dimension mindestens $\sqrt{8} \cdot d$ groß, wobei d den maximalen Abstand eines Punktes des abzubildenden Objekts 2 vom Detektor 5 bezeichnet (siehe Figur 2). Natürlich können auch mehrere Detektoren 5 nebeneinander angeordnet sein, um die Aufnahmedauer für das Tomographieverfahren zu reduzieren (nicht dargestellt).

Handelt es sich beim Objekt 2 um ein zweidimensionales Objekt 2, dann genügt die Drehung um eine Achse. Wenn ein dreidimensionales Objekt 2 untersucht wird, muss der Detektor 5 tangential um die Oberfläche des Objekts 2 in allen möglichen Richtungen bewegt werden bzw. umgekehrt das Objekt 2 in Bezug auf die Detektoren 5 bewegt werden. Zur Rekonstruktion des Objekts 2 können verschiedene bekannte, neue aber auch Kombinationen verschiedenster Methoden angewendet werden. Beispielsweise wird auf die von Köstli und Beard beschriebene Rekonstruktion verwiesen (K.P. Köstli, P.C. Beard: Two-dimensional photoacoustic imaging by use of Fourier transform image reconstruction and a detector with an anisotropic response. Applied Optics, 42 (10), 2003). Bei Verwendung ebener flächiger Detektoren 5 kann die Rekonstruktion über die zweidimensionale inverse Radon-Transformation in besonders geeigneter und wenig aufwendiger Art erfolgen.

Figur 2 zeigt ein perspektivisches Detail der Lage des Detektors 5 in Bezug auf das Objekt 2. Der Detektor 5 ist in Form eines linienförmigen Detektors ausgebildet, wobei die Abmessung 1 des Detektors 5 in einer Dimension mindestens $\sqrt{8} \cdot d$ beträgt, wobei d den maximalen Abstand eines Punktes des abzubildenden Objekts 2 vom Detektor 5 bezeichnet.

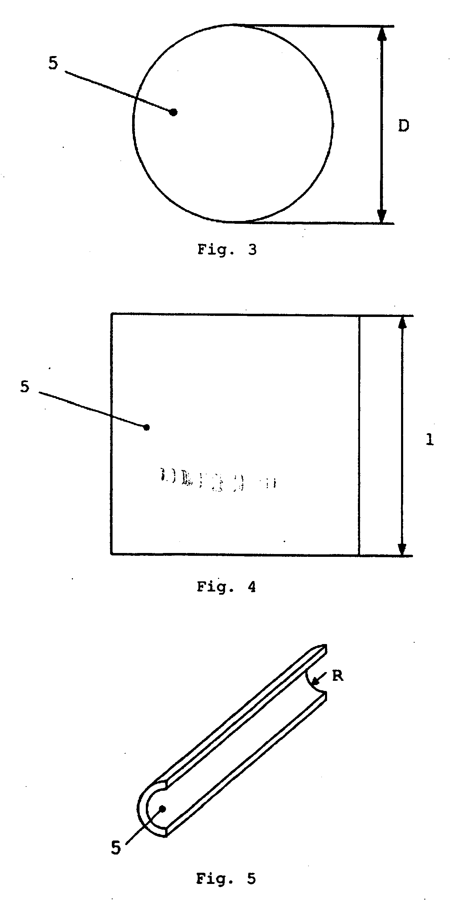

Figur 3 zeigt eine Ausführungsvariante eines Detektors 5 in Form eines flächigen ebenen Detektors mit kreisrunder Gestalt, wobei der Durchmesser D mindestens $\sqrt{8} \cdot d$ beträgt.

Figur 4 zeigt eine Variante eines Detektors 5 in Form eines flächigen ebenen Detektors mit quadratischem Querschnitt, wobei die Länge 1 des Quadrats mindestens $\sqrt{8} \cdot d$ beträgt.

Schließlich zeigt Figur 5 eine perspektivische Ansicht eines gewölbt ausgeführten Detektors 5, wobei der Radius R der Wölbung entsprechend den Gegebenheiten und auch der Größe des Objekts 2 verschiedenartig ausfallen kann. Durch die Wölbung des Detektors 5 sind die Außenabmessungen geringer, wodurch der Detektor 5 leichter um das Objekt 2 bewegt werden kann. Die Wölbung muss jedoch bei der Rekonstruktionsberechnung berücksichtigt werden.

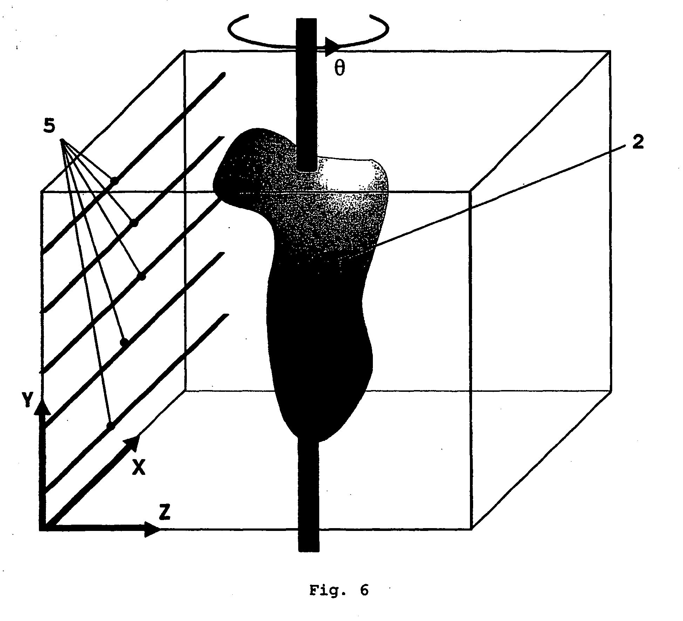

Schließlich zeigt Figur 6 die Anordnung mehrerer linienförmiger Detektoren 5 parallel zueinander in Abstand vom Objekt 2. Bei dieser Ausführungsform wird das Objekt 2 beispielsweise um eine feste Achse gedreht und die vom Objekt 2 ausgehenden akustischen Wellen von den parallelen Detektoren 5 erfasst. Für jeden Drehwinkel des Objekts 2 wird der durch die thermische Anregung hervorgerufene akustische Schalldruck von den Detektoren 5 aufgenommen und aus den gewonnenen Daten schließlich das Abbild des Objekts 2 rekonstruiert.

Das vorliegende Verfahren und die vorliegende Einrichtung ermöglicht die Rekonstruktion besonders hoch aufgelöster Bilder von Objekten mit Detektoren, wie z.B. Piezo-Elementen oder optischen Sensoren mit hoher Grenzfrequenz. Das thermoakustische Tomographieverfahren eröffnet insbesondere in der Medizin neue Möglichkeiten, welche mit derzeitigen bildgebenden Verfahren nicht erreicht werden können.

## Patentansprüche

1.  Thermoakustisches Tomographieverfahren zur Abbildung eines Objekts (2), wobei das Objekt (2) durch eine Quelle (3) thermisch angeregt wird und die durch die thermische Anregung hervorgerufenen akustischen Wellen (4) des Objekts (2) aus verschiedenen Richtungen des Objekts (2) mit zumindest einem Detektor (5) erfasst werden und aus den detektierten akustischen Wellen (4) und der Lageinformation ein Abbild des Objekts (2) rekonstruiert wird, **dadurch gekennzeichnet, dass** ein Detektor (5) mit einer Größe, die zumindest in einer Dimension mindestens $\sqrt{8} \cdot d$ beträgt, verwendet wird, und die vom Detektor (5) erfassten akustischen Wellen (4) zumindest in einer Richtung über eine Länge von mindestens $\sqrt{8} \cdot d$ integriert werden, wobei d den maximalen Abstand eines Punktes des abzubildenden Objekts (2) vom Detektor (5) bezeichnet.

2.  Tomographieverfahren nach Anspruch 1, **dadurch gekennzeichnet, dass** die vom Detektor (5) erfassten akustischen Wellen (4) in einer Richtung über die Länge (1) von mindestens $\sqrt{8} \cdot d$ integriert werden.

3.  Tomographieverfahren nach Anspruch 1, **dadurch gekennzeichnet, dass** die vom Detektor (5) erfassten akustischen Wellen (4) über eine Fläche integriert werden, wobei der Durchmesser (D) der Fläche mindestens $\sqrt{8} \cdot d$ beträgt.

4.  Tomographieverfahren nach einem der Ansprüche 1 bis 3, **dadurch gekennzeichnet, dass** die Rekonstruktion des Abbildes des Objekts (2) durch die inverse Radon-Transformation erfolgt.

**5.** Tomographieverfahren nach einem der Ansprüche 1 bis 4, **dadurch gekennzeichnet, dass** zur Rekonstruktion des Abbildes des Objektes (2) die erfassten Werte mehrerer Detektoren (5) verarbeitet werden.

**6.** Tomographieverfahren nach einem der Ansprüche 1 bis 5, **dadurch gekennzeichnet, dass** der zumindest eine Detektor (5) um das Objekt (2) bewegt wird.

**7.** Tomographieverfahren nach einem der Ansprüche 1 bis 6, **dadurch gekennzeichnet, dass** das rekonstruierte Abbild des Objekts (2) angezeigt wird.

**8.** Tomographieverfahren nach einem der Ansprüche 1 bis 7, **dadurch gekennzeichnet, dass** die durch die thermische Anregung hervorgerufenen akustischen Wellen (4) des Objekts (2) im Frequenzbereich bis zu einigen GHz erfasst werden.

**9.** Tomographieverfahren nach einem der Ansprüche 1 bis 8, **dadurch gekennzeichnet, dass** das Objekt (2) mit Kontrastmitteln zur Beeinflussung des Absorptionsverhaltens versehen wird.

**10.** Thermoakustischer Tomograph (1) zur Abbildung eines Objekts (2), mit zumindest einer Quelle (3) zur thermischen Anregung des Objekts (2), zumindest einem Detektor (5) zur Erfassung der vom Objekt (2) durch die Anregung hervorgerufenen akustischen Wellen (4), mit einer Einrichtung (7) zur Bewegung des Objekts (2) und bzw. oder des zumindest einen Detektors (5) relativ zueinander, und mit einer Einrichtung (8) zur Rekonstruktion des Objekts aus den erfassten akustischen Wellen (4) in Abhängigkeit der jeweiligen Lage des Objekts (2), **dadurch gekennzeichnet, dass** der zumindest eine Detektor (5) zumindest in einer Dimension eine Ausdehnung aufweist, welche mindestens $\sqrt{8} \cdot d$ beträgt, wobei d den maximalen Abstand eines Punktes des abzubildenden Objekts (2) vom Detektor (5) bezeichnet.

**11.** Tomograph (1) nach Anspruch 10, **dadurch gekennzeichnet, dass** der zumindest eine Detektor (5) linien- oder streifenförmig ausgebildet ist, wobei die Länge (1) des Detektors (5) mindestens $\sqrt{8} \cdot d$ beträgt.

**12.** Tomograph (1) nach Anspruch 11, **dadurch gekennzeichnet, dass** mehrere linien- oder streifenförmige Detektoren (5) parallel zueinander angeordnet sind.

**13.** Tomograph (1) nach Anspruch 10, **dadurch gekennzeichnet, dass** der zumindest eine Detektor flächig ausgebildet ist, wobei der Durchmesser (D) der Fläche mindestens $\sqrt{8} \cdot d$ beträgt.

**14.** Tomograph (1) nach einem der Ansprüche 10 bis 13, **dadurch gekennzeichnet, dass** der zumindest eine Detektor (5) eben ausgeführt ist.

**15.** Tomograph (1) nach einem der Ansprüche 10 bis 13, **dadurch gekennzeichnet, dass** der zumindest eine Detektor (5) konkav gewölb ausgeführt ist.

**16.** Tomograph (1) nach Anspruch 15, **dadurch gekennzeichnet, dass** der zumindest eine Detektor (5) in Form eines Halbzylinders ausgeführt ist.

**17.** Tomograph (1) nach einem der Ansprüche 10 bis 16, **dadurch gekennzeichnet, dass** die obere Grenzfrequenz des Detektors (5) mehrere GHz beträgt.

**18.** Tomograph (1) nach einem der Ansprüche 10 bis 17, **dadurch gekennzeichnet, dass** der zumindest eine Detektor (5) durch einen piezoelektrischen Sensor gebildet ist.

**19.** Tomograph (1) nach Anspruch 18, **dadurch gekennzeichnet, dass** der zumindest eine Detektor (5) durch eine Polyvinylidenfluorid-Folie oder Schicht gebildet ist.

**20.** Tomograph (1) nach Anspruch 18, **dadurch gekennzeichnet, dass** der zumindest eine Detektor (5) durch eine Zink-Oxid-Folie oder Schicht gebildet ist.

**21.** Tomograph (1) nach einem der Ansprüche 10 bis 17, **dadurch gekennzeichnet, dass** zumindest ein Detektor (5) durch einen optischen Sensor, insbesondere einen Lichtwellenleiter gebildet ist.

**22.** Tomograph (1) nach einem der Ansprüche 10 bis 21, **dadurch gekennzeichnet, dass** zumindest eine Anregungsquelle (3) durch einen Laser, insbesondere einen Infrarot-Laser gebildet ist.

**23.** Tomograph (1) nach einem der Ansprüche 10 bis 21, **dadurch gekennzeichnet, dass** zumindest eine Anregungsquelle (3) durch eine Mikrowellenquelle gebildet ist.

**24.** Tomograph (1) nach einem der Ansprüche 10 bis 23, **dadurch gekennzeichnet, dass** der zumindest eine Detektor (5) und das Objekt (2) in einem flüssigen Koppelmedium (11) angeordnet sind.

**25.** Tomograph (1) nach einem der Ansprüche 10 bis 24, **dadurch gekennzeichnet, dass** der zumindest eine Detektor (5) mit einer Schutzfolie versehen ist.

26. Tomograph (1) nach einem der Ansprüche 10 bis 25, **dadurch gekennzeichnet, dass** die Bewegungseinrichtung (7) durch einen Schrittmotor gebildet ist.

27. Tomograph (1) nach einem der Ansprüche 10 bis 26, **dadurch gekennzeichnet, dass** die Rekonstruktionseinrichtung (8) durch einen Rechner gebildet ist.

28. Tomograph (1) nach einem der Ansprüche 10 bis 27, **dadurch gekennzeichnet, dass** eine Anzeige (9) zur Darstellung des Abbildes des Objektes (2) vorgesehen ist.

**Claims**

1. A thermoacoustic tomographic method for imaging an object (2), wherein the object (2) is thermally excited by a source (3), and the acoustic waves (4) of the object (2) caused by the thermal excitation are detected from different directions of the object (2) by means of at least one detector (5), and wherein an image of the object (2) is reconstructed from the acoustic waves (4) detected and the positional information, **characterised in that** a detector (5) with a size of at least $\sqrt{8} \cdot d$ in at least one dimension is used, and the acoustic waves (4) detected by the detector (5) are integrated in at least one direction over a length of at least $\sqrt{8} \cdot d$, wherein d represents the maximum distance of a point of the object (2) to be imaged from the detector (5).

2. The tomographic method according to claim 1, **characterised in that** the acoustic waves (4) detected by the detector (5) are integrated in one direction over the length (1) of at least $\sqrt{8} \cdot d$.

3. The tomographic method according to claim 1, **characterised in that** the acoustic waves (4) detected by the detector (5) are integrated over an area, wherein the diameter (D) of the area is at least $\sqrt{8} \cdot d$.

4. The tomographic method according to any one of claims 1 to 3, **characterised in that** the reconstruction of the image of the object (2) is done with inverse Radon-Transformation.

5. The tomographic method according to any one of claims 1 to 4, **characterised in that** the values detected by several detectors (5) are processed for reconstruction of the image of the object (2).

6. The tomographic method according to any one of claims 1 to 5, **characterised in that** the at least one detector (5) is moved about the object (2).

7. The tomographic method according to any one of claims 1 to 6, **characterised in that** the reconstructed image of the object (2) is displayed.

8. The tomographic method according to any one of claims 1 to 7, **characterised in that** the acoustic waves (4) of the object (2) caused by the thermal excitation are detected in the frequency range of up to several GHz.

9. The tomographic method according to any one of claims 1 to 8, **characterised in that** the object (2) is provided with contrast agents for influencing the absorption behaviour.

10. A thermoacoustic tomograph (1) for imaging an object (2), with at least one source (3) for thermal excitation of the object (2), at least one detector (5) for detecting the acoustic waves (4) caused by the excitation, with a device (7) for moving the object (2) and/or the at least one detector (5) relative to each other, and with a device (8) for reconstructing the object from the detected acoustic waves (4) as a function of the respective position of the object (2) **characterised in that** the at least one detector (5) has a size of at least $\sqrt{8} \cdot d$ in at least one dimension, wherein d represents the maximum distance of a point of the object (2) to be imaged from the detector (5).

11. The tomograph (1) according to claim 10, **characterised in that** the at least one detector (5) is designed to be linear or strip-shaped, wherein the length (1) of the detector (5) is at least $\sqrt{8} \cdot d$.

12. The tomograph (1) according to claim 11, **characterised in that** several linear or strip-shaped detectors (5) are arranged in parallel to each other.

13. The tomograph (1) according to claim 10, **characterised in that** the at least one detector is designed to be flat, wherein the diameter (D) of the area is at least $\sqrt{8} \cdot d$.

14. The tomograph (1) according to any one of claims 10 to 13, **characterised in that** the at least one detector (5) is designed to be planar.

15. The tomograph (1) according to any one of claims 10 to 13, **characterised in that** the at least one detector (5) is designed to be concavely curved.

16. The tomograph (1) according to claim 15, **characterised in that** the at least one detector (5) is designed to be of a semicylindrical shape.

17. The tomograph (1) according to any one of claims 10 to 16, **characterised in that** the upper cut-off frequency of the detector (5) is several GHz.

**18.** The tomograph (1) according to any one of claims 10 to 17, **characterised in that** the at least one detector (5) is formed by a piezoelectric sensor.

**19.** The tomograph (1) according to claim 18, **characterised in that** the at least one detector (5) is formed by a polyvinylidene fluoride sheet or layer.

**20.** The tomograph (1) according to claim 18, **characterised in that** the at least one detector (5) is formed by a zinc-oxide sheet or layer.

**21.** The tomograph (1) according to any one of claims 10 to 17, **characterised in that** the at least one detector (5) is formed by an optical sensor, in particular an optical waveguide.

**22.** The tomograph (1) according to any one of claims 10 to 21, **characterised in that** at least one excitation source (3) is formed by a laser, in particular an infra-red laser.

**23.** The tomograph (1) according to any one of claims 10 to 21, **characterised in that** at least one excitation source (3) is formed by a microwave source.

**24.** The tomograph (1) according to any one of claims 10 to 23, **characterised in that** the at least one detector (5) and the object (2) are arranged in a liquid coupling medium (11).

**25.** The tomograph (1) according to any one of claims 10 to 24, **characterised in that** the at least one detector (5) is provided with a protective sheet.

**26.** The tomograph (1) according to any one of claims 10 to 25, **characterised in that** the movement device (7) is formed by a stepping motor.

**27.** The tomograph (1) according to any one of claims 10 to 26, **characterised in that** the reconstruction device (8) is formed by a computer.

**28.** The tomograph (1) according to any one of claims 10 to 27, **characterised in that** a display (9) is provided for displaying the image of the object (2).


**Revendications**

**1.** Procédé de tomographie thermoacoustique destiné à la reproduction d'un objet (2), l'objet (2) étant stimulé thermiquement par une source (3), et les ondes acoustiques (4) engendrées par la stimulation thermique de l'objet (2) à partir de différentes directions de l'objet (2) étant détectées par au moins un détecteur (5), et une reproduction de l'objet (2) étant reconstituée à partir des ondes acoustiques (4) détectées et de l'information de position, **caractérisé en ce qu'**il est utilisé un détecteur (5) d'une grandeur qui est d'au moins $\sqrt{8} \cdot d$, au moins dans une dimension, et **en ce que** les ondes acoustiques (4) détectées par le détecteur (5) sont intégrées, au moins dans une direction, sur une longueur d'au moins $\sqrt{8} \cdot d$, d désignant la distance maximale d'un point de l'objet (2) à reproduire par rapport au détecteur (5).

**2.** Procédé de tomographie selon la revendication 1, **caractérisé en ce que** les ondes acoustiques (4) détectées par le détecteur (5) sont intégrées dans une direction sur la longueur (1) d'au moins

$$\sqrt{8} \cdot d.$$

**3.** Procédé de tomographie selon la revendication 1, **caractérisé en ce que** les ondes acoustiques (4) détectées par le détecteur (5) sont intégrées sur une surface, le diamètre (D) de la surface étant d'au moins $\sqrt{8} \cdot d.$

**4.** Procédé de tomographie selon l'une des revendications 1 à 3, **caractérisé en ce que** la reconstitution de la reproduction de l'objet (2) est effectuée par la transformation inverse de Radon.

**5.** Procédé de tomographie selon l'une des revendications 1 à 4, **caractérisé en ce que**, pour la reconstitution de la reproduction de l'objet (2), les valeurs détectées par plusieurs détecteurs (5) sont traitées.

**6.** Procédé de tomographie selon l'une des revendications 1 à 5, **caractérisé en ce que** l'au moins un détecteur (5) est déplacé autour de l'objet (2).

**7.** Procédé de tomographie selon l'une des revendications 1 à 6, **caractérisé en ce que** la reproduction reconstituée de l'objet (2) est affichée.

**8.** Procédé de tomographie selon l'une des revendications 1 à 7, **caractérisé en ce que** les ondes acoustiques (4) engendrées par la stimulation thermique de l'objet (2) sont détectées dans la plage de fréquences allant jusqu'à quelques GHz.

**9.** Procédé de tomographie selon l'une des revendications 1 à 8, **caractérisé en ce que** l'objet (2) est pourvu de moyens de contraste pour influencer le comportement d'absorption.

**10.** Tomographe thermoacoustique (1) destiné à la reproduction d'un objet (2), comportant au moins une source (3) pour la stimulation thermique de l'objet (2), au moins un détecteur (5) pour la détection des ondes acoustiques (4) engendrées par la stimulation de l'objet (2), un dispositif (7) pour le déplacement de l'objet (2) et/ou de l'au moins un détecteur (5) l'un par rapport à l'autre, et un dispositif (8) pour la reconstitution de l'objet à partir des ondes acoustiques (4) détectées en fonction de la position respective de l'objet (2), **caractérisé en ce que** l'au moins un détecteur (5) présente, au moins dans une dimension, une extension d'au moins $\sqrt{8} \cdot d$, d désignant la distance maximale d'un point de l'objet (2) à reproduire par rapport au détecteur (5).

**11.** Tomographe (1) selon la revendication 10, **caractérisé en ce que** l'au moins un détecteur (5) est agencé en forme de ligne ou de bande, la longueur (1) du détecteur (5) étant d'au moins $\sqrt{8} \cdot d$.

**12.** Tomographe (1) selon la revendication 11, **caractérisé en ce que** plusieurs détecteurs (5) en forme de lignes ou de bandes sont disposés parallèlement les uns par rapport aux autres.

**13.** Tomographe (1) selon la revendication 10, **caractérisé en ce que** l'au moins un détecteur est agencé de façon plate, le diamètre (D) de la surface étant d'au moins $\sqrt{8} \cdot d$.

**14.** Tomographe (1) selon l'une des revendications 10 à 13, **caractérisé en ce que** l'au moins un détecteur (5) est réalisé de façon plane.

**15.** Tomographe (1) selon l'une des revendications 10 à 13, **caractérisé en ce que** l'au moins un détecteur (5) est réalisé en étant cintré de façon concave.

**16.** Tomographe (1) selon la revendication 15 **caractérisé en ce que** l'au moins un détecteur (5) est réalisé sous la forme d'un demi-cylindre.

**17.** Tomographe (1) selon l'une des revendications 10 à 16, **caractérisé en ce que** la fréquence limite supérieure du détecteur (5) est de plusieurs GHz.

**18.** Tomographe (1) selon l'une des revendications 10 à 17, **caractérisé en ce que** l'au moins un détecteur (5) est constitué d'un capteur piézoélectrique.

**19.** Tomographe (1) selon la revendication 18, **caractérisé en ce que** l'au moins un détecteur (5) est constitué d'un film ou d'une couche de fluorure de polyvinylidène.

**20.** Tomographe (1) selon la revendication 18, **caractérisé en ce que** l'au moins un détecteur (5) est constitué d'un film ou d'une couche d'oxyde de zinc.

**21.** Tomographe (1) selon l'une des revendications 10 à 17, **caractérisé en ce qu'**au moins un détecteur (5) est constitué d'un capteur optique, notamment d'un guide d'ondes lumineuses.

**22.** Tomographe (1) selon l'une des revendications 10 à 21, **caractérisé en ce qu'**au moins une source de stimulation (3) est constituée d'un laser, notamment d'un laser infrarouge.

**23.** Tomographe (1) selon l'une des revendications 10 à 21, **caractérisé en ce qu'**au moins une source de stimulation (3) est constituée d'une source de micro-ondes.

**24.** Tomographe (1) selon l'une des revendications 10 à 23, **caractérisé en ce que** l'au moins un détecteur (5) et l'objet (2) sont disposés dans un milieu liquide de couplage (11).

**25.** Tomographe (1) selon l'une des revendications 10 à 24, **caractérisé en ce que** l'au moins un détecteur (5) est doté d'un film de protection.

**26.** Tomographe (1) selon l'une des revendications 10 à 25, **caractérisé en ce que** le dispositif de déplacement (7) est constitué d'un moteur pas à pas.

**27.** Tomographe (1) selon l'une des revendications 10 à 26, **caractérisé en ce que** le dispositif de reconstitution (8) est constitué d'un ordinateur.

**28.** Tomographe (1) selon l'une des revendications 10 à 27, **caractérisé en ce qu'**un affichage (9) est prévu pour la représentation de la reproduction de l'objet (2).

Fig. 1

Fig. 2

5

D

Fig. 3

5

l

Fig. 4

R

5

Fig. 5

Fig. 6

**EP 1 769 228 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5840023 A
- US 6567688 B1

- US 6633774 B2

**In der Beschreibung aufgeführte Nicht-Patentliteratur**

- **R.A. KRUGER ; D.R. REINECKE ; G.A. KRUGER.** Thermoacoustic computed tomography - technical considerations. *Medical Physics,* 1997, vol. 26 (9), 1832-1837
- **R.A. KRUGER ; W.L. KISER ; K.D. MILLER ; H.E. REYNOLDS.** Thermoacoustic CT: Imaging Principles. *Proceedings SPIE,* 2000, vol. 3916, 150-159

- **ANDREEV V. G. et al.** Detection of ultrawide-band ultrasound pulses in optoacoustic tomography. *IEEE transaction on ultrasonics, ferroelectrics and frequency control IEEE USA,* Oktober 2003, vol. 50 (10
- **OBERHEIDE U. et al.** Two-dimensional detection of optoacoustic stress transients. *PROCEEDINGS OF THE SPIE, SPIE,* 2002, vol. 4618, 99-105
- **K.P. KÖSTLI ; P.C. BEARD.** Two-dimensional photoacoustic imaging by use of Fourier transform image reconstruction and a detector with an anisotropic response. *Applied Optics,* 2003, vol. 42 (10